# EUROPÄISCHE PATENTSCHRIFT

(11) **EP 1 119 802 B1**
(45) Veröffentlichungstag und Bekanntmachung des Hinweises auf die Patenterteilung: **20.11.2002**
(21) Anmeldenummer: 99955720.0
(22) Anmeldetag: 14.09.1999
(51) Int. Cl.: G05B 19/418

(54) **VORRICHTUNG ZUR STEUERUNG UND/ODER ÜBERWACHUNG EXTERNER TECHNISCHER PROZESSE**
DEVICE FOR CONTROLLING AND/OR MONITORING EXTERNAL TECHNICAL PROCESSES
DISPOSITIF PERMETTANT DE COMMANDER ET/OU DE SURVEILLER DES PROCESSUS INDUSTRIELS EXTERNES

(30) Priorität: 30.09.1998 DE 19845025
(43) Veröffentlichungstag der Anmeldung: 01.08.2001
(73) Patentinhaber: SIEMENS AKTIENGESELLSCHAFT, 80333 München (DE)
(72) Erfinder: SCHÜTZ, Hartmut, D-91336 Heroldsbach (DE); BARTHEL, Herbert, D-91074 Herzogenaurach (DE); HALLER, Georg, D-91058 Erlangen (DE); SCHENK, Andreas, D-91052 Erlangen (DE)
(86) Internationale Anmeldenummer: DE9902940
(87) Internationale Veröffentlichungsnummer: WO00019286

(56) Entgegenhaltungen:
- WO-A-92/13121
- DE-A- 4 133 636

## Beschreibung

Die vorliegende Erfindung betrifft eine Vorrichtung zur Steuerung und/oder Überwachung externer technischer Prozesse, insbesondere eine Vorrichtung zum Einsatz in Verbindung mit sicherheitsgerichteten Steuerungen, mit einer Eingabefunktionalität, einer Ausgabefunktionalität und einer Verarbeitungsfunktionalität, die zum Transfer prozeßbeeinflussender und/oder prozeßüberwachender Signale über ein Bussystem an Aktoren und/oder von Sensoren zumindest mit einer übergeordneten Einheit verbindbar ist.

Aus der EP 0 499 675 B1 ist ein allein betriebsfähiges Automatisierungsgerät mit einer Eingabe-, einer Ausgabe- und einer Verarbeitungsfunktionalität bekannt.

Aus der DE 41 33 636 ist ein Steuerungsbaustein zum Anschluß an Sensoren und/oder Aktoren eines gesteuerten Systems sowie an einen Datenbus eines Netzwerks mit
einem Mikroprozessor,
einem fest programmierten Speicher für ein Betriebsprogramm bzw. ein Teil-Anwendungsprogramm,
einer Schnittstelle für das Netzwerk,
einer Spannungsversorgung,
einem internen parallelen Bus, der den Mikroprozessor, den fest programmierten Speicher, den programmierbaren Speicher und die Spannungsversorgung miteinander verbindet und wenigstens einem mit dem Mikroprozessor fest verbundenen Steckersockel zur Aufnahme und Kontaktierung wenigstens einer mit dem Aktor und/oder Sensor verbindbaren, angepaßten Signalaufbereitungs-Tochterplatine
bekannt.

Heute am Markt befindliche Feldbussysteme oder Peripheriebussysteme sind aufgrund undeterminierter Antwortzeiten für zeitkritische Sicherheitsanwendungen nur bedingt verwendbar. Bekannte Verwendungen des Kommunikationsmediums haben jedoch bisher den Nachteil, daß Signale für sicherheitstechnisch notwendige Schnellreaktionen nicht mit der erforderlichen Geschwindigkeit von der Zentraleinheit über den Bus an dezentrale Peripheriestationen leitbar sind, da die garantierte Antwortzeit über den Bus die für Schnellreaktionen zur Verfügung stehende Zeit überschreitet. Die garantierte Antwortzeit über den Bus beinhaltet dabei zumindest die Signallaufzeiten über den Bus und die Verarbeitungszeit der Zentraleinheit, wobei sich die Verarbeitungszeit der Zentraleinheit wiederum zumindest aus der Zeit für die Auswertung der Busprotokolle, der Zeit für die Auswertung der Eingangssignale und der Zeit zur Berechnung der Ausgangssignale zusammensetzt.

Aufgabe der vorliegenden Erfindung ist es, die Reaktionszeit der Prozeßsteuerung hinsichtlich sicherheitskritischer Alarmsignale des Prozesses zu verringern.

Diese Aufgabe wird mittels einer Vorrichtung der eingangs genannten Art dadurch gelöst, daß die Verarbeitungsfunktionalität der Vorrichtung logische Verknüpfungen ausführt, deren Ergebnis für die Prozeßsteuerung und/oder Prozeßüberwachung nach Ablauf eines Zeitintervalls zur Verfügung steht, das kürzer ist als die garantierte Antwortzeit, wobei dieses Ergebnis zur Ansteuerung eines Aktors durch die Vorrichtung selbst auswertbar ist.

Bei vielen Automatisierungsprozessen besteht immanent eine Unsymmetrie zwischen logisch tiefen Einschaltfunktionen mit langen Berechnungszeiten und logisch flachen Ausschaltfunktionen mit kurzen Berechnungszeiten. Genau diese Unsymmetrie nutzt die Vorrichtung gemäß der in Anspruch 2 angegebenen vorteilhaften Ausgestaltung der vorliegenden Erfindung insofern aus, als die logisch flachen Ausschaltvorgänge von der Vorrichtung selbst mittels der internen Verarbeitungsfunktionalität bearbeitbar sind, während sich auf Einschaltvorgänge beziehende Signale weiterhin von der übergeordneten Einheit verarbeitet werden und über den Bus von der übergeordneten Einheit an den Prozeß und vom Prozeß an die übergeordnete Einheit gesendet werden.

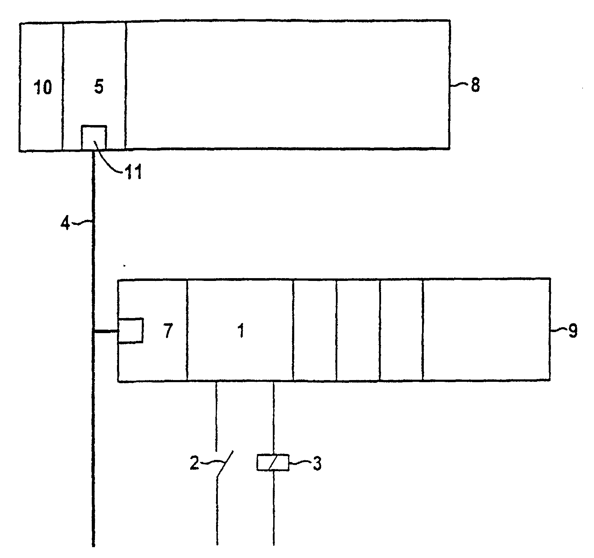

Ein Ausführungsbeispiel der Erfindung wird nachstehend anhand der Zeichnung näher erläutert. Die in Figur 1 dargestellte Anordnung enthält ein übergeordnetes Automatisierungsgerät in einem Zentralrahmen 8 mit einer Zentraleinheit 5 und einer zugehörigen Stromversorgung 10, die aus einer Netzspannung die erforderlichen Betriebskleinspannungen erzeugt. Ein Feldbus 4 wird von der integrierten Bus-Schnittstelle 11 der Zentraleinheit 5 als Bus-Master gesteuert. Außerdem enthält die Anordnung einen oder mehrere Erweiterungsrahmen 9, in denen sich jeweils eine Buskopplungs-Baugruppe 7, nicht gezeichnete Peripherie-Baugruppen zur herkömmlichen Ansteuerung und/oder Überwachung eines externen technischen Prozesses und daneben die erfindungsgemäße Vorrichtung 1 befindet, die im folgenden aufgrund der Integration von Eingabe-, Ausgabe- und Verarbeitungsfunktionalität kurz als Mischbaugruppe 1 bezeichnet wird, die mit einem oder mehreren Aktoren 3 und/oder Sensoren 2 verbunden ist.

Im Ausführungsbeispiel kann mit der Ansteuerung des Aktors 3 der Stempel einer hydraulischen Presse in Betrieb gesetzt werden. Die hierfür erforderlichen logischen Verknüpfungen werden dabei im wesentlichen von der Zentraleinheit 5 ausgeführt, wobei der Zentraleinheit 5 dabei insbesondere Daten weiterer dezentraler Peripheriestationen zur Verknüpfung zur Verfügung stehen, um z.B. an einer Fertigungsstraße eine sequentielle Bearbeitung der jeweiligen Werkstücke sicherzustellen.

Zur Realisierung von Not-Aus-Funktionen ist der Sensor 2 vorgesehen, der gemäß dem Ausführungsbeispiel im Fehler- oder Gefahrenfall ein schnelles Abschalten der hydraulischen Presse ermöglichen soll. Bei einer derartigen Anwendung besteht das Erfordernis, die Presse innerhalb einer vorgebbaren Zeit, die insbesondere kleiner ist als 10 ms, abschalten zu können, um die entsprechenden Sicherheitsfunktionen zu erfüllen.

Die nicht determinierte Reaktionszeit über den Bus 4 garantiert diese Abschaltzeit nicht. Die Verarbeitung des vom Sensor 2 im Fehler- oder Gefahrenfall eingehenden Eingangssignals erfolgt daher in der Mischbaugruppe 1 selbst. Im einfachsten Fall handelt es sich hier um eine WENN-DANN-Verknüpfung in dem Sinne, daß der Aktor 3 abzuschalten ist, sobald ein Eingangssignal vom Sensor 2 ansteht. Insofern ist es ausreichend, wenn die Verarbeitungsfunktionalität der Mischbaugruppe 1 zur Bearbeitung entsprechender logisch "flacher" Verknüpfungen ertüchtigt ist.

Da eine derartige logische Verknüpfung in der Mischbaugruppe 1 unabhängig vom Buszyklus oder vom Zyklus der Zentraleinheit 5 erfolgt, ist ein quasi unverzügliches Abschalten des Aktors 3 gewährleistet, wobei die Zeitdifferenz zwischen dem Betätigen des Sensors 2 und dem Abschalten des Aktors 3 im wesentlichen durch die interne Zykluszeit der Mischbaugruppe 1 vorgegeben ist. Diese ist aufgrund der logisch flachen Verknüpfungen, die die Mischbaugruppe 1 bearbeitet, im Vergleich zu den garantierten Busreaktionszeiten sehr niedrig. Insofern ist mit der Mischbaugruppe 1 eine Schnellreaktionsabschaltung gewährleistet.

Grundsätzlich unterscheidet sich die Funktionalität der Mischbaugruppe 1 nicht von der Funktionalität einer sogenannten Kompaktsteuerung, d.h. einer Steuerung mit Verarbeitungsfunktionalität wie z.B. einer CPU einer leistungsfähigeren speicherprogrammierbaren Steuerung, wobei jedoch an einer derartigen Kompaktbaugruppe unmittelbar Ein- und Ausgabefunktionalitäten vorgesehen sind, die im Falle einer CPU mit Erweiterungsbaugruppen für die jeweiligen Ein- oder Ausgabebaugruppen vorbehalten bleiben.

## Patentansprüche

1. Vorrichtung (1) zur Steuerung und/oder Überwachung externer technischer Prozesse, insbesondere Vorrichtung zum Einsatz in Verbindung mit sicherheitsgerichteten Steuerungen, mit einer Eingabefunktionalität, einer Ausgabefunktionalität und einer Verarbeitungsfunktionalität, die zum Transfer prozeßbeeinflussender und/oder prozeßüberwachender Signale über ein Bussystem (4) an bzw. von an die Vorrichtung (1) anschließbaren Aktoren (3) und/oder Sensoren (2) zumindest mit einer übergeordneten Einheit (5) verbindbar ist, wobei eine garantierte Antwortzeit über das Bussystem (4) einerseits durch die Zykluszeit der übergeordneten Einheit (5) und andererseits durch die Signallaufzeit über das Bussystem (4) bestimmt ist, wobei mittels der Verarbeitungsfunktionalität der Vorrichtung (1) logische Verknüpfungen ausführbar sind, deren Ergebnis nach Ablauf eines Zeitintervalls zur Verfügung steht, das kürzer ist als die garantierte Antwortzeit, und zur Ansteuerung eines Aktors (3) durch die Vorrichtung (1) auswertbar ist,
**dadurch gekennzeichnet,**
**daß** sich auf Einschaltfunktionen beziehende Signale in herkömmlicher Weise von der übergeordneten Einheit (5) über den Bus (4) an die Vorrichtung (1) und von dieser an den externen technischen Prozeß übermittelbar sind und die Einschaltfunktionalität damit herkömmlich ausführbar ist und daß sich auf Ausschaltfunktionen beziehende Signale mittels der Verarbeitungsfunktionalität der Vorrichtung (1) verarbeitbar sind.

2. Vorrichtung (1) nach Anspruch 1,
**dadurch gekennzeichnet,**
**daß** ein Ergebnis einer von der Verarbeitungsfunktionalität der Vorrichtung (1) ausgeführten logischen Verknüpfung nach höchstens 10 ms zur Verfügung steht.

## Claims

1. Device (1) for controlling and/or monitoring external technical processes, in particular a device for use in conjunction with safety-related controls, with an input function, an output function and a processing function, which can be connected to at least one higher-level unit (5) for transfer of process-influencing and/or process-monitoring signals over a bus system (4) to and from actuators (3) and/or sensors (2) which can be connected to the device (1), whereby a guaranteed response time is determined by the cycle time of the higher-level unit (5) over the bus system (4) on the one hand and by the signal run time over the bus system (4) on the other hand, whereby by means of the processing functionality of the device (1) logical links can be executed, the results of which are available on expiry of a time interval that is shorter than the guaranteed response time, and can be evaluated by the device (1) for triggering an actuator (3), **characterised in that** signals relating to switch-on functions can be transferred conventionally from the higher-level unit (5) over the bus (4) to the device (1) and then to the external technical process, and the switch-on functionality can thus be executed conventionally and **in that** signals relating to shut-off functions can be processed by means of the processing functionality of the device (1).

2. Device (1) according to Claim 1, **characterised in that** a result of a logical link executed from the processing functionality of the device (1) is available after no more than 10 ms.

## Revendications

1. Dispositif (1) qui est destiné à commander et/ou surveiller des processus techniques externes, notamment dispositif en vue d'une utilisation en liaison avec des commandes de sécurité, qui comporte une fonctionnalité d'entrée, une fonctionnalité de sortie et une fonctionnalité de traitement et qui peut être relié au moins à une unité supérieure (5) pour le transfert de signaux influençant et/ou surveillant les processus par l'intermédiaire d'un système de bus (4) vers et/ou en provenance d'actionneurs (3) et/ou de capteurs (2) pouvant être raccordés au dispositif (1), dans lequel un temps de réponse garanti par l'intermédiaire du système de bus (4) est déterminé d'une part par le temps de cycle de l'unité supérieure (5) et d'autre part par le temps de propagation de signal par l'intermédiaire du système de bus (4), et dans lequel la fonctionnalité de traitement du dispositif (1) peut réaliser des combinaisons logiques dont le résultat est disponible après l'écoulement d'un intervalle de temps qui est plus court que le temps de réponse garanti et peut être évalué par le dispositif (1) pour la commande d'un actionneur (3),
**caractérisé par le fait que** des signaux se rapportant à des fonctions de branchement peuvent être transmis de manière habituelle par l'unité supérieure (5) au dispositif (1) par l'intermédiaire du bus (4) et dudit dispositif au processus technique externe et la fonctionnalité de branchement peut ainsi être réalisée de manière habituelle et que des signaux se rapportant à des fonctions de débranchement peuvent être traités au moyen de la fonctionnalité de traitement du dispositif (1).

2. Dispositif (1) selon la revendication 1,
**caractérisé par le fait qu'**un résultat d'une combinaison logique réalisée par la fonctionnalité de traitement du dispositif (1) est disponible après 10 ms au maximum.
